# EUROPEAN PATENT APPLICATION

(11) **EP 4 253 151 A1**
(43) Date of publication of application: **04.10.2023**
(21) Application number: 21897247.9
(22) Date of filing: 18.11.2021
(51) Int. Cl.: B60Q 1/44, B60Q 1/12, B60Q 1/22, B60T 7/06, H05B 45/10

(54) **SMART TAIL LIGHTS**

(30) Priority: 24.11.2020 ES 202032544 U
(71) Applicant: Navarro Blanes, Juan Pedro, 09003 Burgos (ES)
(72) Inventor: Navarro Blanes, Juan Pedro, 09003 Burgos (ES)
(74) Representative: Sahuquillo Huerta, Jesús
(86) International application number: PCT/ES2021/070835
(87) International publication number: WO 2022/112634

(57) **Abstract**

Disclosed are smart taillights characterised in that they communicate variable braking intensity, which comprise control means capable of assessing the braking intensity exerted by a driver, such that, depending on the braking intensity, the rear brake lights illuminate in an increasing number, with increasing intensity or both correlatively, to minimise the possibility of a rear-end collision. The smart taillights, with variable braking intensity and reverse lights, are formed by a braking intensity sensor (1), a modulation and control module (2), tail lamps (3) and electromechanical connections, the sensor (1) having electromechanical means integrated into the brake circuit (5) of the vehicle in order to detect the braking level, and the module (2) having means for converting an electromechanical input signal into an electrical output signal for activating the rear brake lights.

## Description

### OBJECT OF THE INVENTION

Smart taillights are mainly characterised by the fact that they transmit a variable braking intensity, they have control means capable of evaluating the intensity of the driver's braking, so that depending on this braking intensity, the rear brake lights illuminate more (from less to more), with greater intensity or both in correlation in order to warn the driver behind in order to minimise the possibility of a rear-end accident and thus eliminate the 2 or 3 seconds it takes to react to this situation.

In the event of extreme emergency braking, the system will activate the maximum illumination and intensity of the brake lights and simultaneously activate all the vehicle's indicators.

These smart taillights are also equipped with an intelligent reversing light that signals the vehicle's manoeuvring turn, one fixed and the other moving, depending on the vehicle's trajectory, alerting users, or vehicles of the vehicle's trajectory.

### FIELD OF APPLICATION OF THE INVENTION

The present invention has its field of application within the automotive sector.

### BACKGROUND TO THE INVENTION

Nowadays, the rear brake lights of vehicles are illuminated when the brake pedal is depressed. These rear brake lights are illuminated with the same intensity and the same number of lights regardless of the type of braking that has taken place, a circumstance that can cause accidents because the vehicle behind does not perceive early enough whether the vehicle in front has braked gently or braked sharply in an emergency.

What the invention proposes, smart taillights have variable braking intensity which have suitable means to make the rear brake lights shine more and more brightly depending on the braking to warn the driver of the vehicle behind.

In addition, at present the reversing lights on vehicles are fixed and only indicate the manoeuvre.

What the invention proposes is that these smart taillights, in addition to indicating the manoeuvre, also indicate the trajectory of the vehicle, transmitting to whoever is at the rear of the vehicle, where the vehicle is heading, making the manoeuvre safer for the driver and for whoever is on that trajectory, whether they are vehicles or users.

At present, there are no known smart taillights with variable braking intensity and reversing light with the same or similar structural and constitutive technical characteristics as described in this specification, as claimed.

### DESCRIPTION OF THE INVENTION

The object of the present invention is the creation of smart taillights, with variable braking intensity and reversing light, which provide an outstanding innovation within their field of application in the current state of the art, the characterising details that make this possible being conveniently set out in the final claims accompanying the present description.

The smart taillights, with variable braking intensity and reversing light, consist of a braking intensity sensor that detects the degree of braking being performed, a modulation and control module that converts the braking signal into an electrical signal to power the brake lights in the rear lights, and electromechanical wiring harnesses that connect all the components to each other and to the vehicle control.

In addition, they are equipped with a steering sensor that detects where the vehicle's steering is moving and a modulation and control module that converts the steering movement signal into an electrical signal to power the reversing lights of the taillights.

This is why the smart taillights with variable braking intensity and reversing light are an outstanding innovation compared to current technology.

### EXPLANATION OF THE FIGURES

For the sake of completeness and to assist in the better understanding of the features of the invention, this description is accompanied, as an integral part thereof, by a figure in which, by way of illustration and not limitation, the following has been depicted.

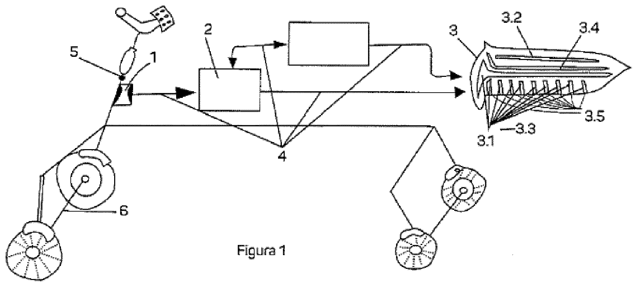

Figure 1 shows a component and flow diagram of the smart taillights with variable braking intensity and reversing light.

### PREFERRED EMBODIMENT OF THE INVENTION

The object of the present invention is smart taillights with variable braking intensity and reversing light, which provide an outstanding innovation within their field of application, the characteristic details which make this possible being conveniently set out in the claims.

Intelligent tail lamps with variable braking intensity and reversing light consist of a braking intensity sensor (1), a modulation and control module (2), tail lamps (3) and electromechanical connections.

In a preferred embodiment, the braking intensity sensor (1) has electromechanical means integrated into the braking circuit (5) of the vehicle to detect the level of braking being performed.

In a preferred embodiment, the modulation and control module (2) has means for converting an electromechanical input signal into a valid electrical output signal for correct activation of the rear brake lights.

In a preferred embodiment, the modulation and control module (2) has an input compatible with the output of the braking intensity sensor (1).

In a preferred embodiment, the modulation and control module (2) has an output compatible with the power supply to the rear lamps (3).

In a preferred embodiment, the sensor (6) has means for converting an electromechanical input signal into a valid electrical output signal for correct activation of the reversing lamps (3.4).

In a preferred embodiment, the tail lamps (3) have brake intensity indicator lamps (3.1).

In a preferred embodiment, the tail lamps (3) have a flashing indicator lamp (3.2), which may be fixed or movable.

In a preferred embodiment, the tail lamps (3) have a position indicator lamp (3.3).

In a preferred embodiment, the smart taillights with variable braking intensity have a reversing light (3.4) which will be either a fixed or a moving light, these will indicate the direction of the vehicle only by moving the one that indicates the direction of the vehicle while the other one will be fixed.

In a preferred embodiment, the tail lamps (3) have fog lamps (3.5).

## Claims

1. - Smart taillights, **characterised in that** they consist of a braking intensity sensor (1), a modulation and control module (2), tail lamps (3) and electromechanical connections.

2. - Smart taillights, according to the previous claim, **characterised in that** the braking intensity sensor (1) has electromechanical means integrated in the braking circuit (5) of the vehicle.

3. - Smart taillights, according to claims 1 and 2, **characterised in that** the modulation and control module (2) has means for converting an electromechanical input signal into an electrical output signal.

4. - Smart taillights, according to the previous claims, **characterised in that** the modulation and control module (2) has an input compatible with the output of the braking intensity sensor (1).

5. - Smart taillights, according to the previous claims, **characterised in that** the modulation and control module (2) has an output compatible with the power supply of the tail lamps (3).

6. - Smart taillights, according to the previous claims, **characterised in that** the tail lamps (3) have brake intensity indicator lights (3.1).

7. - Smart taillights, according to the previous claims, **characterised in that** the rear lights have a flashing indicator light (3.2) which may be fixed or mobile.

8. - Smart taillights according to the preceding claims, **characterised in that** the rear lamps have a position indicator lamp (3.3) which shall be the same as the brake lamp (3.1) but with a lower pitch.

9. - Smart taillights, according to the preceding claims, **characterised in that** the rear lights have a reversing indicator light (3.4), one of which is fixed and the other moving, indicating the direction of the vehicle.

10. - Smart taillights with variable braking intensity, according to the previous claims, **characterised in that** the rear lamps have a fog lamp (3.5) which is only the small part of the headlamp that is divided.
